Europäisches Patentamt

European Patent Office

Office européen des brevets

(11) Numéro de publication: **0 182 058**
**B1**

(12) **FASCICULE DE BREVET EUROPÉEN**

(45) Date de publication du fascicule du brevet:
**14.12.88**

(21) Numéro de dépôt: **85112641.7**

(22) Date de dépôt: **05.10.85**

(51) Int. Cl.⁴: **F 16 K 15/02, F 24 D 3/10**

(54) Robinet à dispositif anti-retour pour le remplissage d'une enceinte fermée.

(30) Priorité: **25.10.84 FR 8416732**

(43) Date de publication de la demande:
**28.05.86 Bulletin 86/22**

(45) Mention de la délivrance du brevet:
**14.12.88 Bulletin 88/50**

(84) Etats contractants désignés:
**BE CH DE GB IT LI LU NL SE**

(56) Documents cité:
**FR-A-2 118 578**
**FR-A-2 251 766**
**US-A-2 671 516**
**US-A-2 702 044**
**US-A-3 674 061**

(73) Titulaire: **COMAP, 46, rue de l'Idustrie, F-45550
Saint Denis de l'Hotel (FR)**

(72) Inventeur: **Forest, Jean- Claude, 38, rue de la
Solaie, F-45550 Saint- Denis de l'Hôtel (FR)**
Inventeur: **Rousselet, Claude, 36, rue de la Solaie,
F-45550 Saint- Denis de l'Hôtel (FR)**

(74) Mandataire: **Puit, Thierry, c/o Centre de
Recherches de Pont- à- Mousson B.P. 28, F-54703
Pont- à- Mousson Cedex (FR)**

LIBER, STOCKHOLM 1988

## Description

La présente invention concerne un robinet à dispositif anti-retour pour le remplissage à une enceinte fermée, notamment d'une installation de chauffage central à eau chaude comme indiqué dans le préambule de la revendication 1. Un tel robinet est connu par le document FR-A-2 118 578.

Les installations de chauffage central à eau chaude sont connectées au réseau d'adduction d'eau sous pression par une canalisation, ce qui permet leur remplissage et leur mise en pression avant leur mise en route, ainsi que les appoints d'eau nécessaires par la suite. Un robinet d'arrêt monté sur la canalisation permet de commander le début et la fin du remplissage ou d'un appoint. Si au cours de l'une de ces opérations, la pression dans le réseau d'adduction d'eau diminue de façon sensible à cause d'un incident affectant ce réseau, la pression régnant dans l'installation de chauffage central peut alors devenir supérieure à celle régnant dans le réseau d'adduction et l'eau contenue dans l'installation peut s'écouler en sens inverse et polluer ainsi le réseau d'adduction d'eau. Un clapet anti-retour peut être monté entre le robinet d'arrêt et l'installation de chauffage pour éviter un tel reflux d'eau polluée. Mais, si la baisse de pression dans le réseau d'adduction d'eau se produit de façon brutale, la dépression engendrée est telle qu'elle peut provoquer une fuite du clapet anti-retour ce qui a pour effet de polluer le réseau d'adduction d'eau par le reflux de l'eau contenue dans l'installation de chauffage central.

La Demanderesse s'est posé le problème de créer un robinet à dispositif anti-retour pour le remplissage d'une enceinte fermée qui assure à la fois la fonction d'un robinet d'arrêt et d'un clapet anti-retour, permettant la mise en communication de cette enceinte avec un réseau d'adduction d'eau sous pression et interdisant le reflux de l'eau contenue dans cette enceinte vers le réseau d'adduction d'eau en cas de baisse de la pression dans ce dernier. En outre, ce robinet à dispositif anti-retour met fin de façon automatique à une opération de remplissage ou d'appoint lorsque la pression dans l'enceinte fermée atteint une valeur prédéterminée.

A cet effet, la présente invention a pour objet un robinet à dispositif anti-retour pour le remplissage d'une enceinte fermée, relié d'une part, à un réseau d'adduction d'eau sous pression, d'autre part, à l'enceinte à remplir, comportant trois clapets placés en série sur le trajet suivi par l'eau à l'intérieur du robinet comme revendiqué dans la revendication 1.

D'autres caractéristiques et avantages de l'invention apparaîtront à la lecture de la description ci-après, faite en référence aux dessins annexés donnés uniquement à titre d'exemple non limitatif et parmi lesquels:

- la Fig. 1 est une vue éclatée, en coupe longitudinale diamétrale, d'un robinet à dispositif anti-retour selon l'invention;
- la Fig. 2 est une vue en coupe longitudinale diamétrale, en position fermée du robinet à dispositif anti-retour représenté à la Fig. 1;
- la Fig. 3 est une vue en coupe longitudinale diamétrale, en position ouverte, du robinet à dispositif anti-retour représenté à la Fig. 1;
- la Fig. 4 est une vue partielle, en coupe longitudinale diamétrale, d'une première variante du robinet à dispositif anti-retour selon l'invention;
- la Fig. 5 est une vue partielle, en coupe longitudinale diamétrale, d'une seconde variante du robinet à dispositif anti-retour selon l'invention.

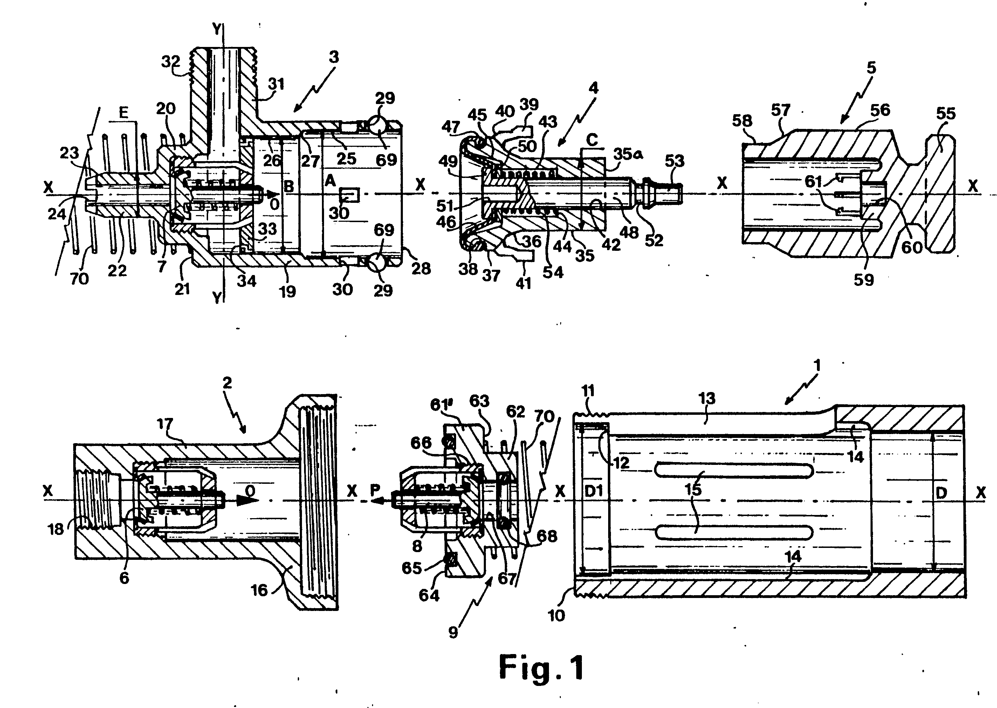

Le robinet à dispositif anti-retour pour le remplissage d'une enceinte fermée selon l'invention, représenté aux figures 1 à 3, se compose essentiellement des pièces suivantes:

- un corps 1, fermé à l'une de ses extrémités par un couvercle 2 contenant un clapet anti-retour 6 (clapet d'arrivée);
- un piston 3, creux, contenant un clapet anti-retour (clapet de sortie);
- un porte-membrane 4;
- un poussoir 5;
- un porte-clapet 9 dans lequel est monté un clapet anti-retour 8 (clapet intermédiaire).

Le corps 1 a la forme générale d'un cylindre creux d'axe X-X, de diamètre intérieur D dont l'une des extrémités 10 est filetée extérieurement en 11 et comporte un alésage de diamètre D1, supérieur au diamètre D, formant un épaulement intérieur 12. Une fente longitudinale 13, parallèle à l'axe X-X, de largeur L, est ménagée sur environ les deux tiers de la longueur du corps 1 et débouche à l'extrémité 10 dudit corps 1. Deux gorges 14 longitudinales, parallèles à l'axe X-X, diamètralement opposées et de section semi-circulaire sont creusées dans la paroi intérieure du corps 1. Elles commencent à l'extrémité 10 du corps 1 et s'étendent sur les trois quarts environ de la longueur du corps 1, donc sur une plus grande longueur que la fente 13. Enfin, des lumières 15, longitudinales, sont découpées dans la paroi du corps 1.

Le couvercle 2 comporte une partie 16 creuse, filetée intérieurement, destinée à être vissée sur l'extrémité 10 du corps 1, et un tubulure 17 de plus petit diamètre, prolongeant la partie 16, dont l'extrémité libre est taraudée en 18. Le clapet anti-retour 6 est monté dans la tubulure 17, son sens d'ouverture, de la gauche vers la droite à la figure 1, étant indiqué par la flèche O.

On désigne par clapet anti-retour un ensemble connu formé par une soupape, son siège, son ressort de rappel, sa garniture d'étanchéité montés dans une cage servant à la fois de guide à la tige de soupape et d'appui au ressort de rappel.

Le piston 3 a la forme générale d'une douille 19, d'axe X-X, de diamètre extérieur légèrement inférieur au diamètre intérieur D du corps 1. La douille 19 est prolongée par une partie cylindrique creuse 20, d'axe X-X, filetée intérieurement, dont le diamètre extérieur est inférieur au diamètre extérieur de la douille 19, le raccordement de la douille 19 et de la partie creuse 20 formant un épaulement 21. La partie cylindrique creuse 20 est elle-même prolongée par une tubulure 22, d'axe X-X, de diamètre extérieur E, se terminant par une partie tronconique 23 dans laquelle sont ménagées deux fentes 24 diamétrales perpendiculaires. La douille 19 comporte deux alésages successifs 25-26, de diamètres respectifs A et B, le diamètre A étant plus grand que le diamètre 8, raccordés par un tronc de cône 27. A proximité de l'extrémité libre 28 de la douille 19 sont percés deux trous 29 circulaires débouchants, diamétralement opposés. A mi-longueur environ de l'alésage 25, sont ménagées dans la paroi de la douille 19 au moins deux et de préférence quatre lumières 30 rectangulaires, diamètralement opposées deux à deux selon deux diamètres perpendiculaires entre eux. Enfin, une tubulure latérale 31 cylindrique, d'axe Y-Y perpendiculaire à l'axe X-X est disposée à l'extrémité de la douille 19, du côté de la partie cylindrique creuse 20 et débouche dans l'alésage 26 de diamètre B de la douille 19. L'extrémité libre de la tubulure 31 est filetée extérieurement en 32. Le diamètre extérieur de la tubulure 31 est légèrement inférieur à la largeur L de la fente 13 ménagée dans le corps 1.

Le clapet anti-retour 7 est monté dans le filetage intérieur de la partie cylindrique creuse 20, son sens d'ouverture, de la gauche vers la droite à la figure 1, étant indiqué par la flèche O. Contre la cage du clapet anti-retour 7 est disposée une plaquette 33 circulaire de diamètre extérieur très légèrement inférieur au diamètre intérieur B de l'alésage 26, dans la périphérie de laquelle sont percés deux ouvertures (trous) 34 en chicane de faible diamètre, diamètralement opposés.

Le contour extérieur du porte-membrane 4 comporte une partie cylindrique 35 d'axe X-X d'extrémité libre 35 a, de diamètre extérieur C, raccordée à une seconde partie cylindrique 37 d'axe X-X de plus grand diamètre par une partie tronconique 36. Une gorge 38 circonférentielle est ménagée dans la partie cylindrique 37. La partie tronconique 36 porte au moins deux et de préférence quatre pattes d'accrochage 39 venues de matière, équidistantes, diamètralement opposées deux à deux, s'étendant parallèlement à l'axe X-X et dirigées vers l'extrémité libre 35a de la partie cylindrique 35. La partie extérieure des pattes 39 présente une partie tronconique 40, de même conicité que le tronc de cône 27 de la douille 19 et une partie d'extrémité 41 faisant saillie vers l'extérieur, perpendiculairement à l'axe X-X.

Dans le porte-membrane 4 est ménagé un alésage 42, d'axe X-X, débouchant à l'extrémité libre 35a de la partie cylindrique 35 et s'étendant sur à peu près la moitié de la longueur de celle-ci, qui se raccorde à une chambre cylindrique 43 de plus grand diamètre, d'axe X-X, le raccordement de l'alésage 42 et de la chambre 43 formant un épaulement 44. La chambre 43 débouche à l'extrémité opposée à l'extrémité 35a par un alésage tronconique 45 d'axe X-X s'évasant vers l'extérieur.

Une membrane souple 46, en forme de cloche, réalisée en matériau élastomère par exemple, recouvre l'extrémité libre 37 de plus grand diamètre du porte-membrane 4. Elle est fixée à ce dernier par un bourrelet périphérique 47, similitorique, engagé dans la gorge 38 de la partie cylindrique 37. Le diamètre extérieur de la partie cylindrique 37 coiffée de la membrane est légèrement inférieur au diamètre intérieur B de l'alésage 26 de la douille 19. La membrane 46 est solidaire d'une tige 48, d'axe X-X, qui peut coulisser dans l'alésage 42 du porte-membrane, la partie centrale de la membrane, dans laquelle est ménagée une ouverture pour le passage de la tige 48, étant pincée entre une tête applatie 49 terminant la tige 48 et une rondelle 50. Un trou borgne 51, d'axe X-X, est ménagé dans l'extrémité de la tige 48 terminée par la tête 49. La tige 48, qui s'étend au-delà de l'extrémité libre 35a du porte-membrane 4 est dotée à proximité de son extrémité opposée à la tête 49 d'une gorge 52 et se termine par une partie 53 de plus faible diamètre. Enfin, un ressort 54 taré, réalisé pour développer un effort bien déterminé, est disposé à l'état comprimé concentriquement à la tige 48 entre l'épaulement 44 et la rondelle 50.

Le poussoir 5 a la forme générale d'une douille d'axe X-X dont l'extrémité fermée est raccordée extérieurement à une partie 55 formant poignée de manoeuvre. Le contour extérieur de la douille comporte une partie cylindrique 56, de diamètre extérieur légèrement inférieur au diamètre intérieur A de l'alésage 25 de la douille 19, prolongée par une partie tronconique 57, dont le demi-angle au sommet situé sur l'axe X-X a une valeur de 30° environ, se raccordant à une partie cylindrique 58 dont le diamètre extérieur est inférieur à la distance séparant les faces internes de deux pattes d'accrochage 39, diamètralement opposées du porte-membrane 4. Le diamètre intérieur du poussoir 5 est légèrement supérieur au diamètre extérieur C de la partie cylindrique 35 du porte-membrane 4. Dans le fond du poussoir 5 est ménagé un bossage 59, percé d'un trou borgne 60, de diamètre légèrement supérieur au diamètre extérieur de l'extrémité 53 de la tige 48. Le bossage 59 porte, venues de matière, quatre pattes d'accrochage 61 équidistantes, diamètralement opposées deux à deux, dont les extrémités en forme de crochet sont destinées à venir s'encliqueter dans la gorge 52 de la tige 48.

Le porte-clapet 9 a son contour extérieur formé par deux parties cylindriques 61' et 62 d'axe X-X, de diamètres différents, raccordées par un épaulement 63, la partie 61' ayant le diamètre le plus grand. Le diamètre extérieur de la partie 61' est légèrement inférieur au diamètre intérieur D1 de l'alésage de l'extrémité 10 du corps 1. Dans la face terminale 64 de la partie 61' est ménagée une gorge circulaire logeant un joint d'étanchéité 65. Un alésage 66, d'axe X-X, taraudé sur une partie de sa longueur, traverse la partie cylindrique 61' et reçoit le clapet anti-retour 8 dont le sens d'ouverture, de la droite vers la gauche à la figure 1, est indiqué par la flèche P. Le clapet anti-retour 8 s'ouvre donc en sens contraire des clapets 6 et 7. Un second alésage 67 d'axe X-X prolongeant l'alésage 66, traverse la partie 62. Il comporte une gorge circulaire logeant un joint d'étanchéité 68. Le diamètre intérieur de l'alésage 67 est légèrement supérieur au diamètre extérieur E de la tubulure 22 du piston 3. Les diamètres extérieurs de la partie cylindrique 62 du porte-clapet 9 et de la partie cylindrique 20 du piston 3 ont la même valeur.

Le montage du robinet à dispositif anti-retour s'effectue de la façon suivante:

- le porte-membrane 4 muni de la membrane 46 et de la tige 48 est enfilé dans la douille 19 du piston 3 muni du clapet anti-retour 7 et de la plaquette 33. Il est poussé jusqu'à ce que les quatre pattes d'accrochage 39 soient encliquetées dans les lumières 30 de la douille 19, solidarisant ainsi le porte membrane 4 et le piston 3. On remarquera que la partie tronconique 40 des pattes 39 est alors en appui sur le tronc de cône 27 de la douille 19 et que l'étanchéité entre le piston 3 et le porte membrane 4 est réalisée par la partie extérieure de la membrane et son bourrelet simili-torique 47.

Le poussoir 5 est ensuite enfilé sur la partie cylindrique 35 du porte-membrane 4 et poussé jusqu'à ce que les pattes d'accrochage 61 soient encliquetées dans la gorge 52 de la tige 48, solidarisant ainsi le porte-membrane 4 et le poussoir 5. Deux billes 69, de diamètre très légèrement inférieur au diamètre des trous 29 de la douille 19 sont disposées dans ces trous 29 et maintenues en place par de la graisse consistante. Les billes 69 ne peuvent s'échapper vers l'intérieur de la douille 19, la partie cylindrique 58 du poussoir déjà en place les en empêchant.

L'ensemble piston 3- porte-membrane 4- poussoir 5- est glissé dans le corps 1, la tubulure 31 prenant place dans la fente 13 longitudinale du corps 1 et les billes 69 étant disposées en face des gorges 14 longitudinales. L'ensemble 3-4-5 est poussé dans le corps 1 jusqu'à ce que la tubulure 31 vienne en buté avec l'extrémité de la fente 13.

Le porte-clapet 9 muni de son clapet anti-retour 8 est monté à l'extrémité 10 du corps 1, son épaulement 63 venant en appui sur l'épaulement 12 du corps 1, après qu'un ressort 70 d'axe X-X, prenant appui d'une part sur l'épaulement 21 du piston 3, d'autre part sur l'épaulement 63 du porte-clapet 9, ait été interposé entre le piston 3 et le porte clapet 9. Le ressort 70 est légèrement comprimé au montage.

Enfin, le couvercle 2 est vissé sur le filetage 11 de l'extrémité 10 du corps 1, le joint 65 assurant l'étanchéité entre le corps 1 et le couvercle 2.

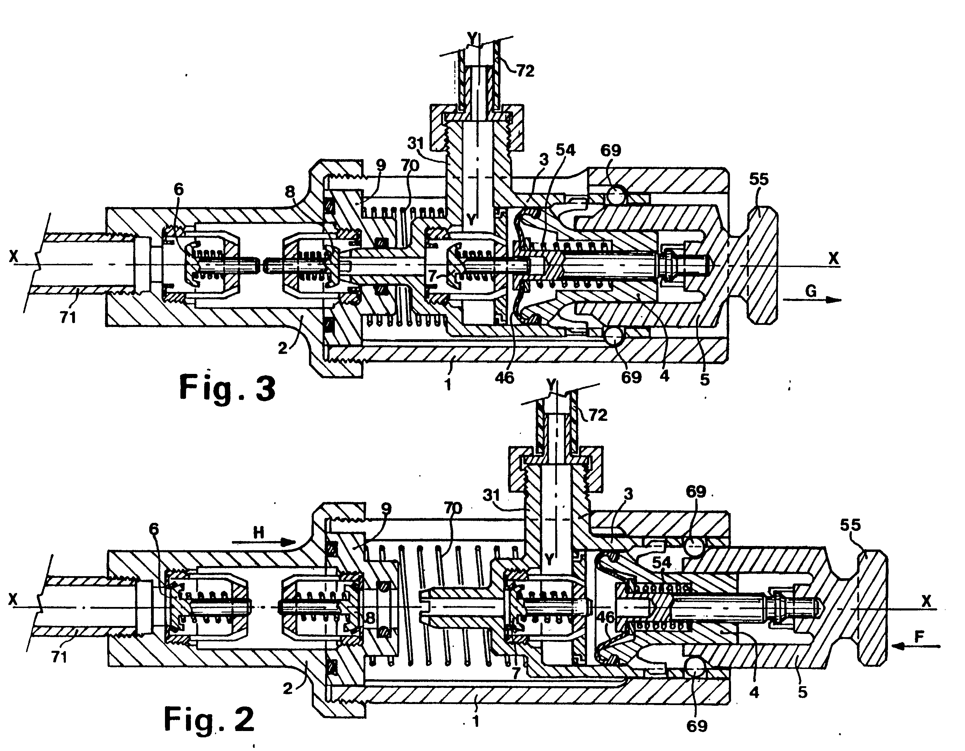

Le robinet à dispositif anti-retour après son montage est représenté à la Fig. 2. On pourra remarquer qu'il comprend les trois clapets anti-retour 6, 7, 8 successifs, les clapets 6 et 7 extrêmes s'ouvrant dans un sens tandis que le clapet 8 intermédiaire s'ouvre en sens inverse des deux premiers clapets.

Le fonctionnement du robinet à dispositif anti-retour objet de l'invention va être décrit maintenant.

Le robinet à dispositif anti-retour est relié, d'une part, au réseau d'adduction d'eau par une canalisation 71 rigide vissée dans le taraudage 18 de la tubulure 17 du couvercle 2, d'autre part, à l'enceinte à remplir par une tuyauterie souple 72 solidaire de l'extrémité filetée 32 de la tubulure 31 du piston 3.

A la figure 2, le robinet à dispositif anti-retour est représenté en position fermée. Il apparaît clairement que, sous l'action de la pression régnant dans la canalisation 71 reliée au réseau d'adduction d'eau sous pression, le clapet 6 peut s'ouvrir mais que le clapet 8 est plaqué sur son siège par son ressort et par la pression de l'eau, empêchant ainsi tout passage de l'eau.

Pour permettre le passage de l'eau de la canalisation 71 à la tuyauterie souple 72 et procéder au remplissage de l'enceinte, il suffit à l'utilisateur d'excercer une poussée, suivant la flèche F, sur l'extrémité 55 du poussoir 5 (voir figure 2). Sous l'effet de cette poussée, le poussoir 5 se déplace vers la gauche entraînant avec lui le piston 3 par l'intermédiaire des billes 69 logées dans les trous 29 du piston 3 et appuyées contre la partie tronconique 57 du poussoir 5. Lorsqu'au cours du déplacement vers la gauche de l'ensemble piston 3-porte-membrane 4-poussoir 5, les billes 69 atteignent le début des gorges 14 longitudinales, les billes 69, poussées par la partie tronconique 57 du poussoir 5, s'effacent dans les gorges 14 permettant au poussoir 5 de se déplacer encore vers la gauche jusqu'à ce que les billes 69 reposent sur la partie cylindrique 56 du poussoir 5. L'ensemble piston 3-porte-membrane 4-poussoir 5 est alors verrouillé dans la position représentée à la figure 3. Dans cette position, qui est la position d'ouverture du robinet à dispositif anti-retour, le ressort 70 est comprimé, la tubulure 22 du piston 3 est engagée dans l'alésage 67 du porte-clapet 9, le joint 68 assurant l'étanchéité entre la tubulure 22 et l'alésage 67, et l'extrémité de la tubulure 22 éloigne de son siège la soupape du clapet 8 le maintenant ainsi en position ouverte. Le clapet 8 joue donc le rôle d'un robinet d'arrêt dont l'ouverture est commandée par l'extrémité de la tubulure 22 du piston 3.

Sous l'action de la pression de l'eau du réseau d'adduction, le clapet 6 est ouvert, l'eau peut ainsi gagner par les fentes 24 l'intérieur de la tubulure 22, éloigner de son siège la soupape du clapet 7 et atteindre la tubulure 31 puis la tuyauterie souple 72 et l'enceinte à remplir.

Dans la position ouverte représentée à la figure 3, la membrane 46 est soumise d'une part à la pression régnant dans l'enceinte en cours de remplissage, d'autre part à la poussée antagoniste du ressort taré 54.

En fin de remplissage, la pression dans l'enceinte à remplir est telle que la poussée qu'elle exerce sur la membrane 46 devient supérieure à la poussée antagoniste exercée par le ressort taré 54. La membrane 46 se déplace alors vers la droite entraînant avec elle la tige 48 et le poussoir 5. Les billes 69 ne sont plus alors en appui sur la partie cylindrique 56 mais sur la partie tronconique 57 du poussoir. Sous la poussée du ressort 70 qui est comprimé, les billes 69 s'effacent, quittant les gorges longitudinales 14, ce qui provoque le déverrouillage du dispositif et le retour en position fermée de l'ensemble piston 3-porte-membrane 4-poussoir 5.

Si au cours du remplissage la pression du réseau d'adduction d'eau venait à chuter et devenait inférieure à celle régnant dans l'enceinte à cet instant, le clapet 7 se fermerait empêchant tout retour de l'eau polluée déjà contenue dans l'enceinte à remplir. Dans le cas où le clapet 7 ne serait pas parfaitement étanche, le clapet 6 placé dans le couvercle 2 empêcherait tout retour d'eau polluée dans le réseau d'adduction.

Si au cours d'un remplissage ou d'un appoint d'eau dans l'enceinte, l'utilisateur veut pour une raison quelconque, interrompre l'opération, il lui suffit de tirer vers la droite, dans le sens de la flèche G (Figure 3), le poussoir 5 par la poignée 55, pour provoquer le déverrouillage. En effet, lors du déplacement vers la droite du poussoir 5, les billes 69 perdent leur appui sur la partie cylindrique 56 du poussoir et s'effacent, sous l'action du ressort 70 comprimé, lorsqu'elles se trouvent à l'aplomb de la partie tronconique 57 du poussoir 5.

Le robinet à dispositif anti-retour selon l'invention peut aussi être monté de façon telle que la tubulure 31 du piston 3 est reliée à l'enceinte à remplir par une canalisation rigide tandis que la tubulure 17 du couvercle 2 est reliée par une tuyauterie souple au réseau d'adduction d'eau. Dans ce cas, pour effectuer un remplissage ou un appoint d'eau, l'utilisateur exercera une poussée de la gauche vers la droite, suivant la flèche H (voir figure 2) sur le couvercle 2. Le corps 1 se déplacera alors de la gauche vers la droite jusqu'à ce que les billes 69 se trouvent en face du début des gorges 14. Le poussoir 5, sous l'action du ressort 54 qui est à l'état comprimé, se déplacera de la droite vers la gauche et présentera sa partie cylindrique 56 en appui aux billes 69. Le robinet à dispositif anti-retour sera ainsi verrouillé en position ouverte, comme cela a été décrit plus haut.

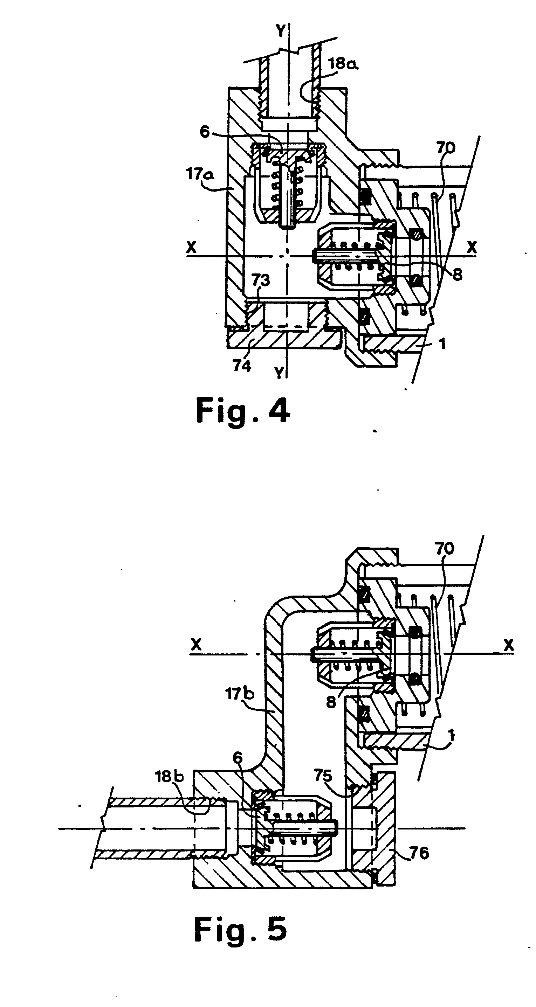

Il peut être envisagé une première variante du robinet à dispositif anti-retour décrit précédemment, représentée à la figure 4. Dans cette variante, la tubulure 17 rectiligne du couvercle 2 est remplacée par une tubulure 17a d'axe Y-Y perpendiculaire à l'axe X-X du corps 1. Le clapet anti-retour 6 est monté dans cette tubulure, une ouverture 73 opposée à l'ouverture 18a permettant le montage du clapet 6. Un bouchon 74 obture l'ouverture 73 après le montage du clapet. Dans cette variante les tubulures 17a du couvercle 2 et 31 du piston 3 sont parallèles.

Une seconde variante, représentée à la figure 5, peut encore être envisagée. La tubulure 17 rectiligne du couvercle 2 est remplacée par une tubulure 17b, coudée à 90° par rapport à l'axe X-X du corps 1. Le clapet anti-retour 6 est monté dans cette tubulure, une ouverture 75 opposée à l'ouverture 18b permettant le montage du clapet 6. Un bouchon 76 obture l'ouverture 75 après le montage du clapet.

Le robinet à dispositif anti-retour selon l'invention présente les avantages suivants:

- il est compact, puisque dans un même appareil sont intégrés un robinet d'arrêt et deux clapets anti-retour;

- il offre une grande sécurité car deux clapets anti-retour empêchent tout reflux de l'eau de l'enceinte dans le réseau d'adduction d'eau;

- il permet, sans démontage, de savoir si les clapets 7 et 8 sont bien étanches. En effet, lorsque le robinet à dispositif anti-retour est en position fermée, si le clapet 8 fuit, l'eau du réseau pourra atteindre l'antérieur du corps 1 par l'alésage 67 du porte-clapet 9 et s'écouler à l'extérieur du corps 1 par les lumières 15 ménagées dans celui-ci. De même, si le clapet 7 fuit, l'eau contenue dans l'enceinte pourra s'écouler par la tubulure 22 dans le corps 1 et s'écouler à l'extérieur par les lumières 15. L'utilisateur est donc prévenu du mauvais état des clapets par un écoulement d'eau par les lumières 15 du corps 1;

- il permet de remplir une enceinte à une pression prédéterminée et revient automatiquement à sa position fermée lorsque cette pression est atteinte;

- le retour automatique en position fermée est indépendant de la vitesse d'écoulement de l'eau dans l'appareil car la membrane 46 est protégée de l'impact de l'eau en circulation par la plaquette 33, les chicanes 34 ménagées dans cette dernière permettant à la membrane d'être soumise seulement à la pression statique régnant dans l'enceinte à remplir;

- il peut être monté de deux façons différentes entre le réseau d'adduction d'eau et l'enceinte à remplir à savoir:

\* le corps 1 relié au réseau d'adduction d'eau par une canalisation rigide et le piston 3 relié à l'enceinte à remplir par une tuyauterie souple, l'ouverture du robinet à dispositif anti-retour étant provoquée par une poussée sur le poussoir 5 de la droite vers la gauche;

\* le corps 1 relié au réseau d'adduction d'eau par une tuyauterie souple et le piston 3 relié à l'enceinte à remplir par une canalisation rigide, l'ouverture étant alors provoquée par une poussée de la gauche vers la droite sur le corps 1;

- une opération de remplissage ou d'appoint en eau de l'enceinte peut être interrompue à tout moment par l'utilisateur par simple traction sur la poignée 55 du poussoir 5.

## Revendications

1. Robinet à dispositif anti-retour relié, d'une part, à un réseau d'adduction d'eau sous pression, d'autre part, à une enceinte fermée à remplir, comportant un clapet d'arrivée (6), un clapet de sortie (7) et un clapet intermédiaire (8) placés en série sur le trajet suivi par l'eau à l'intérieur du robinet, le clapet intermédiaire (8) ayant son sens d'ouverture opposé à celui des autres clapets (6, 7), l'ouverture du clapet de sortie (7) étant commandée par la pression de l'eau, et l'ouverture d'un des autres clapets étant commandée par un poussoir, caractérisé en ce qu'il est constitué par un corps (1), fermé à l'une de ses extrémités par un couvercle (2) prolongé par une tubulure (17) raccordée au réseau d'adduction d'eau, dans lequel coulisse un piston creux (3) à l'intérieur duquel est monté un porte-membrane (4) solidaire d'une part du piston (3), d'autre part du ppussoir (5), et par un porte-clapet (9) interposé entre le couvercle (2) et l'extrémité correspondante du corps (1).

2. Robinet suivant la revendication 1 caractérisé en ce que le clapet (8) intermédiaire est monté dans le porte-clapet (9), le clapet d'arrivée (6) est monté dans la tubulure (17) du couvercle (2), et le clapet de sortie (7) est monté à l'intérieur du piston (3).

3. Robinet suivant la revendication 1 caractérisé en ce que le corps (1) a la forme générale d'un cylindre creux d'axe X-X, dont l'une des extrémités (10) porte un filetage extérieur (11) destiné à être vissé dans le couvercle (2) et dans lequel sont ménagées une fente longitudinale (13) débouchant à l'extrémité (10), au moins deux gorges longitudinales (14) de section semi-circulaire et des lumières longitudinales (15).

4. Robinet suivant la revendication 1 caractérisé en ce que le piston (3) est constitué par une douille (19) d'axe X-X raccordée par un épaulement (21) à une partie cylindrique (20) creuse coaxiale de même axe X-X, de plus petit diamètre extérieur, qui se prolonge par une tubulure (22) de même axe X-X dont l'extrémité tronconique (23) éloigne de son siège la soupape du clapet (8), commandant ainsi son ouverture, la douille (19) étant munie d'une tubulure latérale (31) perpendiculaire à son axe X-X débouchant dans la partie cylindrique creuse (20), ladite tubulure (31) étant raccordée par son extrémité libre à l'enceinte fermée à remplir.

5. Robinet suivant la revendication 4 caractérisé en ce que la partie cylindrique creuse (20) présente un filetage intérieur sur lequel est fixé le clapet de sortie (7).

6. Robinet suivant la revendication 4 caractérisé en ce qu'une plaquette circulaire (33), à la périphérie de laquelle est ménagée au moins une ouverture (34) en chicane, est disposée contre la cage du clapet de sortie (7) et en aval de celui-ci sur le trajet suivi par l'eau à l'intérieur du robinet.

7. Robinet suivant la revendication 4 caractérisé en ce que la douille (19) comprend deux alésages (25) et (26) dont l'un (25), a un diamètre plus grand que l'autre (26), raccordés entre-eux par un tronc de cône (27).

8. Robinet suivant la revendication 7 caractérisé en ce qu'à proximité de l'extrémité (28) de la douille (19) sont ménagés au moins deux trous (29) circulaires dans la paroi du plus grand alésage (25), des billes (69) étant logées dans ces trous.

9. Robinet suivant la revendication 7 caractérisé en ce qu'au moins deux lumières (30) sont ménagées dans la paroi de l'alésage (25) de la douille (19).

10. Robinet suivant la revendication 1 caractérisé en ce que le contour extérieur du porte-membrane (4) comporte une partie cylindrique (35) d'axe X-X, d'extrémité libre (35a), raccordée à une seconde partie cylindrique (37) d'axe X-X, de plus grand diamètre dans laquelle est ménagée une gorge (38) circonférentielle, par une partie tronconique (36) portant au moins deux pattes (39) d'accrochage.

11. Robinet suivant les revendications 9 et 10 caractérisé en ce que le porte-membrane (4) est disposé à l'intérieur de l'alésage (25) de la douille (19) et solidaire de celle-ci par les pattes (39) d'accrochage engagées dans les lumières (30) de l'alésage (25) de la douille (19).

12. Robinet suivant la revendication 10 caractérisé en ce que dans le porte-membrane (4) sont ménagés, suivant le même axe X-X, un alésage (42) débouchant à l'extrémité libre (35a) du porte-membrane (4), une chambre (43) cylindrique raccordée à l'alésage (42) par un épaulement (44) et un alésage tronconique (45), prolongeant la chambre (43), s'évasant vers l'extérieur.

13. Robinet suivant l'une des revendications 10 à 12 caractérisé en ce qu'une membrane souple (46) en forme de cloche coiffe l'extrémité libre de la partie cylindrique (37) du porte-membrane (4) et est solidaire de celle-ci au moyen d'un bourrelet périphérique (47) similitorique engagé dans sa gorge (38) circonférentielle.

14. Robinet suivant la revendication 13 caractérisé en ce que la membrane souple (46) est solidaire par sa partie centrale d'une tête aplatie (49) d'une tige (48) montée coulissante dans l'alésage (42), la tête dans laquelle est ménagé un trou borgne (51) servant de dégagement pour la tige de la soupape du clapet (7).

15. Robinet suivant la revendication 14 caractérisé en ce qu'une gorge (52) circonférentielle est ménagée dans la tige (48) à proximité de son extrémité opposée à la tête aplatie (49).

16. Robinet suivant l'une des revendications 12 et 13 caractérisé en ce qu'un ressort (54) taré est disposé dans la chambre (43), concentriquement à la tige (48), en prenant appui sur l'épaulement (44) du porte-membrane (4) et sur la partie centrale de la membrane (46).

17. Robinet suivant la revendication 1 caractérisé en ce que le poussoir (5) a la forme générale d'une douille d'axe X-X ouverte vers le porte-membrane (4), prolongée par une poignée (55), dans le fond de laquelle est ménagé un bossage (59) percé d'un trou borgne (60) recevant l'extrémité (53) de la tige (48), ce bossage (59) portant des pattes (61) d'accrochage.

18. Robinet suivant les revendications 8 et 17 caractérisé en ce que le contour extérieur du poussoir (5) comporte une partie cylindrique (56) d'axe X-X se raccordant du côté opposé à la poignée (55) à une seconde partie cylindrique (58) de même axe X-X, de plus petit diamètre, par une partie tronconique (57) coopérant avec les billes (69).

19. Robinet suivant les revendications 15 et 17 caractérisé en ce que le poussoir (5) entoure la partie cylindrique (35) du porte-membrane et est solidaire de la tige (48) traversant le porte-membrane (4) par les pattes d'accrochage (61) engagées dans la gorge (52).

20. Robinet suivant la revendication 1 caractérisé en ce que le contour extérieur du porte-clapet (9) est formé de deux parties cylindriques (61') et (62) d'axe X-X se raccordant entre-elles par un épaulement (63), le diamètre de la partie (61') étant supérieur à celui de la partie (62).

21. Robinet suivant la revendication 20 caractérisé en ce que la partie cylindrique (61') se termine par une face libre (64) dans laquelle est ménagée une gorge circulaire logeant un joint d'étanchéité (65).

22. Robinet suivant les revendications 20 et 21 caractérisé en ce que le porte-clapet (9) est percé de deux alésages (66) et (67) successifs de même axe X-X, l'alésage (66) recevant le clapet (8) et l'alésage (67) recevant un joint d'étanchéité (68) logé dans une gorge circulaire ménagée dans sa paroi.

23. Robinet suivant l'une quelconque des revendications 1 à 22 caractérisé en ce qu'un ressort (70) est interposé entre le piston (3) et le porte-clapet (9), ce ressort prenant appui d'une part sur l'épaulement (21) du piston (3), d'autre part sur l'épaulement (63) du porte-clapet (9), ce ressort servant à rappeler le piston (3) dans la position de fermeture du robinet.

**Patentansprüche**

1. Ventil mit einer Rückflußverhinderungsvorrichtung, welches einerseits mit einem Zufuhrnetz für Druckwasser, andererseits mit einem geschlossenen Füllbehälter verbunden ist, umfassend eine Einlaßklappe (6), eine Auslaßklappe (7) und eine Zwischenklappe (8), die in Reihe längs der vom Wasser durchströmten Bahn im Inneren des Ventils angeordnet sind, wobei die Öffnungsrichtung der Zwischenklappe (8) der Richtung der anderen Klappen (6, 7) entgegengesetzt ist, die Öffnung der Auslaßklappe (7) vom Wasserdruck gesteuert und die Öffnung einer der anderen Klappen von einem Drücker gesteuert wird,
dadurch gekennzeichnet, daß das Ventil aus einem Gehäuse (1) gebildet ist, welches an einem seiner Enden durch einen Deckel (2) geschlossen ist, der durch ein am Wasserzufuhrnetz angeschlossenes Rohr (17) verlängert ist, und in welchem ein hohler Kolben (3) verschiebbar ist, in dessen Innerem eine einerseits mit dem Kolben (3) und andererseits mit dem Drücker (5) verbundene Tragmembran (4) angeordnet ist, und daß das Ventil eine zwischen dem Deckel (2) und dem entsprechenden Ende (1) angeordnete Tragklappe (9) aufweist.

2. Ventil nach Anspruch 1,
dadurch gekennzeichnet daß die Zwischenklappe (8) in der Tragklappe (9), die Einlaßklappe (6) im Rohr (17) des Deckels (2) und die Auslaßklappe (7) im Inneren des Kolbens (3) angeordnet sind.

3. Ventil nach Anspruch 1,
dadurch gekennzeichnet, daß das Gehäuse (1) im wesentlichen die Form eines Hohlzylinders mit einer Achse X-X besitzt, dessen eines Ende (10) ein Außengewinde (11) zum Einschrauben in den Deckel (2) aufweist und in welchem ein am Ende (10) ausmündender Längsschlitz (13), mindestens zwei Längsnuten (14) mit halbkreisförmigem Querschnitt und Langlöcher (15) ausgebildet sind.

4. Ventil nach Anspruch 1,
dadurch gekennzeichnet, daß der Kolben (3) durch eine Hülse (19) mit der Achse (X-X) gebildet ist, die über eine Schulter (21) mit einem zur Achse (X-X) koaxialen hohlzylindrischen Teil (20) mit einem kleineren Außendurchmesser verbunden ist, der sich in ein Rohr (22) mit der Achse (X-X) fortsetzt, dessen kegelstumpfförmiges Ende (23) das Klappenventil (8) von seinem Sitz wegdrückt und dessen Öffnung steuert, und daß die Hülse (19) mit einem seitlichen zur Achse (X-X) senkrechten Rohr (31) versehen ist, welches im hohlzylinderförmigen Teil (20) einmündet und an seinem freien Ende am geschlossenen Füllbehälter angeschlossen ist.

5. Ventil nach Anspruch 4,
dadurch gekennzeichnet, daß der hohlzylinderförmige Teil (20) ein Innengewinde aufweist, an welchem die Auslaßklappe (7) befestigt ist.

6. Ventil nach Anspruch 4,
dadurch gekennzeichnet, daß eine kreisförmige Scheibe (33), die an ihrem Umfang mit mindestens einer Drosselöffnung (34) versehen ist, am Gehäuse der Auslaßklappe (7) und bezüglich der Bahn des Wassers im Innern des Ventils stromabwärts angeordnet ist.

7. Ventil nach Anspruch 4,

dadurch gekennzeichnet, daß die Hülse (19) zwei Bohrungen (25) und (26) aufweist, von denen die Bohrung (25) einen größeren Durchmesser als die Bohrung (26) aufweist und daß beide Bohrungen miteinander über einen Kegelstumpf (27) verbunden sind.

8. Ventil nach Anspruch 7,

dadurch gekennzeichnet, daß nahe dem Ende (28) der Hülse (19) mindestens zwei kreisförmige Öffnungen (29) in der Wand der größeren Bohrung (25) vorgesehen sind, in welchen Kugeln (69) gelagert sind.

9. Ventil nach Anspruch 7,

dadurch gekennzeichnet, daß mindestens zwei Langlöcher (30) in der Wand der Bohrung (25) der Hülse (19) ausgebildet sind.

10. Ventil nach Anspruch 1,

dadurch gekennzeichnet, daß die Ausführungsform der Drahtmembran (4) einen zylinderförmigen Teil (25) mit der Achse X-X und einem freien Ende (35a) aufweist, welcher mit einem zweiten zylinderförmigen Teil (37) mit der Achse X-X, welche einen größeren Durchmesser aufweist und in dem eine Umfangsnut (38) ausgebildet ist, durch einen kegelstumpfförmigen Teil (36) verbunden ist, der mindestens zwei Verankerungsklammern (39) trägt.

11. Ventil nach den Ansprüchen 9 und 10,

dadurch gekennzeichnet, daß die Tragmembran (4) im Inneren der Bohrung (25) der Hülse (19) angeordnet und mit dieser durch die Verankerungsklammern (39) verbunden ist, welche in die Langlöcher (30) der Bohrung (25) der Hülse (19) eingreifen.

12. Ventil nach Anspruch 10,

dadurch gekennzeichnet, daß in der Tragmembran (4) in Richtung der Achse X-X eine am freien Ende (35) der Tragmembran (4) ausmündende Bohrung (42), eine mit der Bohrung (42) durch eine Schulter (44) verbundene zylinderförmige Kammer (43) sowie eine kegelstumpfförmige Bohrung, die sich an der Kammer (43) anschließt und sich nach außen hin aufweitet, vorgesehen sind.

13. Ventil nach einem der Ansprüche 10 bis 12,

dadurch gekennzeichnet, daß eine biegsame Membran (46) in Form einer Glocke das freie Ende des zylinderförmigen Teils (37) der Tragmembran (4) bedeckt und mit diesem mittels einer konusartigen umlaufenden Wulst (47) verbunden ist, welche in die Umfangsnut (38) eingreift.

14. Ventil nach Anspruch 13,

dadurch gekennzeichnet, daß die biegsame Membran (46) an ihrem mittleren Abschnitt mit einem abgeplatteten Kopf (49) einer Stange (48) verbunden ist, die verschiebbar in der Bohrung (42) gelagert ist, und daß der Kopf eine Sackbohrung (51) für die Stange des Klappenventils (7) aufweist.

15. Ventil nach Anspruch 14,

dadurch gekennzeichnet, daß in der Stange (48) in der Nähe ihres dem abgeplatteten Kopf (49) gegenüberliegenden Endes eine Umfangsnut (52) ausgebildet ist.

16. Ventil nach einem der Ansprüche 12 und 13,

dadurch gekennzeichnet, daß eine tarierte Feder (54) in der Kammer (43) konzentrisch zum Schaft (48) angeordnet ist und sich auf der Schulter (44) der Tragmembran (4) und auf dem mittleren Teil der Membran (46) abstützt.

17. Ventil nach Anspruch 1,

dadurch gekennzeichnet, daß der Drücker (5) im wesentlichen die Form einer zur Tragmembran (4) offenen Buchse mit der Achse X-X aufweist, die durch einen Druckknopf (55) verlängert ist, in dessen Boden ein Vorsprung (59) mit einer Sackbohrung (60) zur Aufnahme des Endes (53) des Schafts (48) ausgebildet ist, wobei der Vorsprung (59) Verankerungsklauen (61) trägt.

18. Ventil nach den Ansprüchen 8 und 17,

dadurch gekennzeichnet, daß die Außenkontur des Drückers (5) einen zylinderförmigen Teil (56) mit der Achse X-X aufweist, der an der dem Drücker (55) gegenüberliegenden Seite mit einem zweiten zylinderförmigen Teil (58) derselben Achse X-X und mit einem kleineren Durchmesser über einen mit den Kugeln (69) zusammenwirkenden kegelstumpfförmigen Abschnitt (57) verbunden ist.

19. Ventil nach den Ansprüchen 15 und 17,

dadurch gekennzeichnet, daß der Drücker (5) den zylinderförmigen Teil (35) der Tragmembrane umgibt und mit dem die Tragmembrane durchgreifenden Schaft (48) durch die in die Nut (52) einrückenden Verankerungsklauen (61) verbunden ist.

20. Ventil nach Anspruch 1,

dadurch gekennzeichnet, daß die Außenkontur der Tragklappe (9) aus zwei zylinderförmigen Teilen (61' und 62) mit der Achse X-X gebildet sind, die miteinander über eine Schulter (63) verbunden sind, wobei der Durchmesser des Teils (61') größer als der des Teils (62) ist.

21. Ventil nach Anspruch 20,

dadurch gekennzeichnet, daß der zylinderförmige Teil (61') in einer freien Fläche (64) endet, in welcher eine kreisförmige Nut zur Aufnahme eines Dichtglieds (65) ausgebildet ist.

22. Ventil nach den Ansprüchen 20 und 21,

dadurch gekennzeichnet, daß die Tragklappe (9) von zwei aufeinanderfolgenden Bohrungen (66) und (67) mit derselben Achse X-X durchbohrt ist, wobei die Bohrung (66) die Klappe (8) und die Bohrung (67) ein Dichtglied (68) aufnimmt, welches in einer in seiner Wand angeordneten kreisförmigen Nut untergebracht ist.

23. Ventil nach einem der Ansprüche 1 bis 22,

dadurch gekennzeichnet, daß zwischen dem Kolben (3) und der Tragklappe (9) eine Feder (70) angeordnet ist, die sich einerseits auf der Schulter (21) des Kolbens (3) und andererseits auf der Schulter (63) der Tragklappe (9) abstützt, wobei die Feder dazu dient, den Kolben (3) in die Schließstellung des Ventils zurückzustellen.

## Claims

1. Valve with non-return device connected on the one hand to a water supply network under pressure, and on the other hand to a closed receptacle to be filled, comprising an inlet valve member (6), an outlet valve member (7) and an intermediate valve member (8) located in series on the path followed by the water inside the valve, the intermediate valve member (8) having its direction of opening opposite that of the other valve members (6, 7), the opening of the outlet valve member (7) being control led by the pressure of the water, and the opening of one of the other valve members being controlled by a push rod, characterised in that it is constituted by a body (1) closed at one of its ends by a cover (2) prolonged by a tube (17) connected to the water supply network, wherein there slides a hollow piston (3), on the inside whereof is installed a membrane holder (4) integral on the one hand with the piston (3), on the other hand with the push rod (5), and by a valve member holder (9) inserted between the cover (2) and the corresponding end of the body (1).

2. Valve according to Claim 1, characterised in that the intermediate valve member (8) is installed in the valve member holder (9), the inlet valve member (6) is installed in the tube (17) of the cover (2) and the outlet valve member (7) is installed inside the piston (3).

3. Valve according to Claim 1, characterised in that the body (1) has the general shape of a hollow cylinder of axis X-X, one of the ends (10) whereof has an external thread (11) designed to be screwed into the cover (2) and wherein are provided a longitudinal slit (13) opening into the end (10), at least two longitudinal grooves (14) semi-circular in section, and longitudinal slots (15).

4. Valve according to Claim 1, characterised in that the piston (3) is constituted by a sleeve (19) of axis X-X connected by a shoulder (21) to a hollow coaxial cylindrical part (20) of the same axis X-X, of smaller external diameter, which is prolonged by a tube (22) of the same axis X-X, the truncated end (23) whereof separates the valve member (8 ) from its seat, thus controlling its opening, the sleeve (19) being provided with a lateral manifold (31), perpendicular to its axis X-X opening into the cylindrical hollow part (20), said manifold (31) being connected by its free end to the closed receptacle to be filled.

5. Valve according to Claim 4, characterised in that the hollow cylindrical part (20) has an internal thread onto which the outlet valve member (7) is fixed.

6. Valve according to Claim 4, characterised in that a small circular plate (33), on the periphery whereof there is provided at least one staggered opening (34), is arranged against the cage of the outlet valve member (7) and downstream thereof along the path followed by the water inside the valve.

7. Valve according to Claim 4, characterised in that the sleeve (19) comprises two bores (25) and (26) whereof one (25) has a diameter larger than the other (26), connected together by a truncated cone (27).

8. Valve according to Claim 7, characterised in that close to the end (28) of the sleeve (19) there are provided at least two circular holes (29) in the wall of the larger bore (25), balls (69) being lodged in these holes.

9. Valve according to Claim 7, characterised in that at least two slots (30) are provided in the wall of the bore (25) of the sleeve (19).

10. Valve according to Claim 1, characterised in that the outside contour of the membrane holder (4) comprises a cylindrical part (35) of axis X-X, of a free end (35a) connected to a second cylindrical part (37) of axis X-X of a larger diameter, wherein is provided a circumferential groove (38), by a truncated part (36) carrying at least two anchoring lugs (39).

11. Valve according to Claims 9 and 10, characterized in that the membrane holder (4) is arranged inside the bore (25) of the sleeve (19) and integral therewith by the anchoring lugs (39) engaged in the slots (30) of the bore (25) of the sleeve (19).

12. Valve according to Claim 10, characterised in that in the membrane holder (4) there are provided, following the same axis X-X, a bore (42) opening at the free end (35a) of the membrane holder (4), a cylindrical chamber (43) connected to the bore (42) by a shoulder (44) and a truncated bore (45), prolonging the chamber (43) opening out towards the outside.

13. Valve according to one of Claims 10 to 12, characterised in that a flexible membrane (46) in the shape of a bell covers the free end of the cylindrical part (37) of the membrane holder (4) and is integral therewith by means of a peripheral, complementarily shaped rim (47) engaged in its circumferential groove (38).

14. Valve according to Claim 13, characterised in that the flexible membrane (46) is integral by its central part with a flattened head (49) of a rod (48) slidably mounted in the bore (42), the head in which there is provided a recessed hole (51) serving to disengage the rod from the valve member (7).

15. Valve according to Claim 14, characterised in that a circumferential groove (52) is provided in the rod (48) close to its end opposite the flattened head (49).

16. Valve according to one of Claims 12 and 13, characterized in that a calibrated spring (54) is arranged in the chamber (43), concentrically to the rod (48), bearing on the shoulder (44) of the membrane holder (4) and on the central part of the membrane (46).

17. Valve according to Claim 1, characterised in that the push rod (5) has the general shape of a sleeve of axis X-X open towards the membrane holder (4), prolonged by a handle (55), in the base whereof there are provided bosses (59), pierced by a recessed hole (60), receiving the end (53) of the rod (48), these bosses (59) bearing anchoring lugs (61).

18. Valve according to Claims 8 and 17, characterized in that the outside contour of the push rod (5) comprises a cylindrical part (56) of axis X-X connected on the side opposite the handle (55) to a second cylindrical part (58) of the same axis X-X, of smaller diameter, by a truncated part (57) cooperating with the balls (69).

19. Valve according to Claims 15 and 17, characterized in that the push rod (5) surrounds the cylindrical part (35) of the membrane holder and is integral with the rod (48) passing through the membrane holder (4) by means of the anchoring lugs (61) engaged in the groove (52).

20. Valve according to Claim 1, characterized in that the outside contour of the valve member holder (9) is formed from two cylindrical parts (61') and (62) of axis X-X connected together by a shoulder (63), the diameter of the part (61') being larger than that of the part (62).

21. Valve according to Claim 20, characterized in that the cylindrical part (61') ends with a free face (64) wherein there is provided a circular groove holding a sealing ring (65).

22. Valve according to Claims 20 and 21, characterized in that the valve member holder (9) is pierced by two successive bored (66) and (67) of the same axis X-X , the bore (66) receiving the valve member (8) and the bore (67) receiving a sealing ring (68) held in a circular groove provided in its wall.

23. Valve according to any one of Claims 1 to 22, characterized in that a spring (70) is inserted between the piston (3) and the valve member holder (9), this spring bearing on the one hand on the shoulder (21) of the piston (3), on the other hand on the shoulder (63) of the valve member holder (9), this spring serving to return the piston (3) to the closed position of the valve.

Fig. 1

0 182 058

Fig. 3

Fig. 2

**Fig. 4**

**Fig. 5**